Europäisches Patentamt

European Patent Office

Office européen des brevets

(19)

(11) **EP 0 553 889 B1**

(12) **EUROPÄISCHE PATENTSCHRIFT**

(45) Veröffentlichungstag und Bekanntmachung des
Hinweises auf die Patenterteilung:
**10.01.1996 Patentblatt 1996/02**

(51) Int Cl.⁶: **C08J 9/12**
// C08L83/04

(21) Anmeldenummer: **93103948.1**

(22) Anmeldetag: **11.03.1993**

(54) **Treibmittelzusammensetzungen und Verfahren zu Herstellung von elastomeren Siliconschaumstoffen**

Foaming agent compositions, and method for producing elastomeric silicone foams

Compositions d'agents moussants et procédé d'obtention de mousses élastomères de silicone

(84) Benannte Vertragsstaaten:
**AT BE CH DE ES FR GB IT LI NL SE**

(30) Priorität: **20.10.1992 DE 4235309**

(43) Veröffentlichungstag der Anmeldung:
**04.08.1993 Patentblatt 1993/31**

(73) Patentinhaber: **WACKER-CHEMIE GMBH**
**D-81737 München (DE)**

(72) Erfinder:
• **Freyer, Christian, Dr.**
**W-8263 Burghausen (DE)**
• **Maschberger, Adolf**
**W-8263 Burghausen (DE)**

(56) Entgegenhaltungen:
EP-A- 0 507 986    EP-A- 0 548 789
DE-A- 2 810 921    US-A- 4 189 545
US-A- 4 391 765    US-A- 4 584 324
US-A- 4 613 630    US-A- 5 061 736

• **Encyclopedia of Polymer Science and Engineering, pages 252-256, vol. 15, John Wiley and Sons, New York 1989**

Bemerkungen:
Die Akte enthält technische Angaben, die nach dem Eingang der Anmeldung eingereicht wurden und die nicht in dieser Patentschrift enthalten sind.

## Beschreibung

Die Erfindung betrifft Treibmittelzusammensetzungen und Verfahren zu deren Herstellung, Verfahren zur Herstellung von zu elastomeren Siliconschaumstoffen härtbaren Massen und Verfahren zur Herstellung der elastomeren Siliconschaumstoffe.

Zu elastomeren Siliconschaumstoffen härtbare Massen sind bekannt. Für die Herstellung von derartigen Schaumstoffen werden härtbare Massen mit Treibmitteln versetzt, die unter Einwirkung von Temperatur und Gasabspaltung zerfallen und damit während der Härtungsreaktion ein Verschäumen der Massen bewirken. Hierzu sei z.B. auf US-A 2 857 343, US-A 5 019 295 und GB-A 1 130 674 verwiesen.

Bei der durch Platin oder Platinverbindungen katalysierten Härtungsreaktion auf Basis von Si-gebundene Vinylgruppen aufweisenden Diorganopolysiloxanen und Si-gebundene Wasserstoffatome aufweisenden Diorganopolysiloxanen wird durch die Zugabe von Wasser, organische Alkohole oder Si-gebundene Hydroxylgruppen aufweisenden Diorganopolysiloxanen Wasserstoff als Treibgas entwickelt, der die Verschäumung einleitet. Hierzu sei auf US-A 4 189 545, US-A 4 613 630, US-A 4 871 781 und EP-B 227 233 verwiesen.

Gemäß EP-B 97 915 bzw. US-A 4 391 765 wird ein elastomerer Schaumstoff erhalten durch mechanische Erzeugung eines Schaumes aus einer wäßrigen, reaktionsfähigen Siliconemulsion, Hinzufügen von oberflächenaktivem Mittel und Verdickungsmittel, um den Schaum bis zum Entfernen des Wassers stabil zu machen, und anschließender Trocknung des Schaums im Ofen oder an Luft bzw. anschließendes Aussetzen des Schaumes einer zum Entfernen von Wasser ausreichenden Menge an Mikrowellenenergie.

Aus US-A 4 584 324 ist eine unter Überdruck stehende Zusammensetzung bekannt umfassend eine wäßrige Emulsion, die vernetzendes Siliconpolymer, Emulgator, Wasser und gegebenenfalls Füllstoff, Vernetzungsmittel und Verdickungsmittel enthält und die beim Trocknen bei Raumtemperatur zu einem elastomeren Film härtet, und ausreichend Aerosol-Treibmittel, wie Stickstoff, Stickoxid, Isobutan, Propan, Dichlordifluormethan oder Trichlorfluormethan, um die Zusammensetzung in einen Schaum umzuwandeln, wenn sie bei 25°C auf Atmosphärendruck entspannt wird, wobei der Schaum einen elastomeren Schaumstoff nach Entfernen von Wasser ergibt.

Es bestand die Aufgabe zur Herstellung von elastomeren Siliconschaumstoffen geeignete Treibmittelzusammensetzungen auf Wasserbasis bereitzustellen. Weiterhin bestand die Aufgabe, zu elastomeren Siliconschaumstoffen härtbare Massen bereitzustellen, die keine toxischen oder toxische Spaltprodukte freisetzenden Treibmittel enthalten.

Gegenstand der Erfindung sind Treibmittelzusammensetzungen (a) dadurch gekennzeichnet, daß sie Mischungen sind, die

10 bis 50 Gew.% Organopolysiloxane (1),
1 bis 7 Gew.% Emulgatoren (2),
20 bis 80 Gew.% Wasser (3) als Treibmittel, als wäßrige Emulsion und
5 bis 40 Gew.% Verdickungsmittel (4) enthalten, mit der Maßgabe, daß sie nicht Kohlenwasserstoffe,

Fluorchlorkohlenwasserstoffe, Stickstoff, Stickstoffoxid, Luft, Sauerstoff, Kohlendioxid, Dimethylether, Argon, Helium und Organozinnverbindungen enthalten.

Gegenstand der Erfindung sind weiterhin Verfahren zur Herstellung von Treibmittelzusammensetzungen (a), wobei wäßrige Emulsionen umfassend Organopolysiloxane (1), Emulgatoren (2) und Wasser (3) mit Verdickungsmitteln (4) in den oben genannten Gewichtsverhältnissen vermischt werden.

Gegenstand der Erfindung sind weiterhin Verfahren zur Herstellung von zu elastomeren Siliconschaumstoffen härtbaren Massen, dadurch gekennzeichnet, daß

die Treibmittelzusammensetzungen (a)
mit Diorganopolysiloxanen (b),
Vernetzungsmitteln (c),
gegebenenfalls Vernetzungskatalysator (d) und
gegebenenfalls Füllstoffen (e) vermischt werden, mit der Maßgabe, daß sie nicht Kohlenwasserstoffe,

Fluorchlorkohlenwasserstoffe, Stickstoff, Stickstoffoxid, Luft, Sauerstoff, Kohlendioxid, Dimethylether, Argon, Helium und Organozinnverbindungen enthalten.

Gegenstand der Erfindung sind weiterhin Verfahren zur Herstellung von elastomeren Siliconschaumstoffen, dadurch gekennzeichnet, daß das oben definierte Verfahren durchgeführt wird und die Gemische unter Einwirkung von Wärme oder Mikrowellenenergie unter gleichzeitiger Verschäumung zu den elastomeren Siliconschaumstoffen gehärtet werden.

Bei den erfindungsgemäßen Treibmittelzusammensetzungen ist Wasser das Treibmittel. Wasser verdampft unter der Einwirkung von Wärme oder Mikrowellenenergie bei der Härtungsreaktion, expandiert dabei und bewirkt während der Härtungsreaktion eine Verschäumung der Massen. Das entstehende Gas Wasserdampf hat den Vorteil nicht-toxisch, nicht-entzündlich und geruchlos zu sein. Weiterhin wird durch die erfindungsgemäße Treibmittelzusammensetzung eine Feinstverteilung von Wasser erzielt.

Die erfindungsgemäßen Treibmittelzusammensetzungen (a) besitzen vorzugsweise eine Viskosität von $1 \cdot 10^5$ mPa·s bis $1 \cdot 10^8$ mPa·s bei 25°C, bevorzugt $5 \cdot 10^5$ mPa·s bis $5 \cdot 10^7$ mPa·s bei 25°C.

Als wäßrige Emulsionen zur Herstellung der erfindungsgemäßen Treibmittelzusammensetzungen (a) können beliebige Siliconemulsionen verwendet werden.

Vorzugsweise werden als Organopolysiloxane (1) solche aus Einheiten der Formel

$$R_x\left(R^1O\right)_y SiO_{\frac{4-x-y}{2}} , \qquad (I)$$

wobei R gleich oder verschieden sein kann und einen einwertigen, gegebenenfalls substituierten Kohlenwasserstoffrest mit 1 bis 18 Kohlenstoffatomen je Rest,

$R^1$ gleich oder verschieden sein kann und Wasserstoff oder einen einwertigen, gegebenenfalls substituierten Kohlenwasserstoffrest mit 1 bis 8 Kohlenstoffatomen je Rest,

x 0, 1, 2 oder 3,

y 0, 1, 2 oder 3

und die Summe x+y 0, 1, 2 oder 3 bedeutet, eingesetzt.

Es können bei Raumtemperatur flüssige oder feste Organopolysiloxane (1) eingesetzt werden.

Bevorzugt werden als Organopolysiloxane (1) lineare Organopolysiloxane der allgemeinen Formel

$$(R^1O)_t R_{3-t} SiO(SiR_2O)_r SiR_{3-t}(OR^1)_t, \qquad (II)$$

wobei R die oben dafür angegebene Bedeutung hat und

$R^1$ die oben dafür angegebene Bedeutung hat,

r eine ganze Zahl im Wert von 50 bis 2000 bedeutet,

t 0 oder 1,

oder cyclische Organopolysiloxane der allgemeinen Formel

$$(R_2SiO)_s, \qquad (III)$$

wobei R die oben dafür angegebene Bedeutung hat und s eine ganze Zahl im Wert von 3 bis 100 bedeutet, oder Organopolysiloxanharze der allgemeinen Formel

$$R_a\left(R^1O\right)_b SiO_{\frac{4-a-b}{2}} , \qquad (IV)$$

wobei R und $R^1$ die oben dafür angegebene Bedeutung haben, a 0, 1, 2 oder 3, durchschnittlich 0,9 bis 1,8, und b 0, 1, 2 oder 3, durchschnittlich 0,0 bis 0,5, bedeutet, eingesetzt.

Obwohl in Formel (II) nicht angegeben, können bis zu 10 Mol-% der Diorganopolysiloxaneinheiten durch andere, meist jedoch nur mit mehr oder weniger schwer vermeidbaren Verunreinigungen vorliegende Siloxaneinheiten, wie $R_3SiO_{1/2}$-, $RSiO_{3/2}$- und $SiO_{4/2}$-Einheiten, ersetzt sein, wobei R die oben dafür angegebene Bedeutung hat.

Bei dem Organopolysiloxan der Formel (IV) handelt es sich insbesondere um Organopolysiloxan aus $RSiO_{3/2}$-Einheiten oder Organopolysiloxan aus $RSiO_{3/2}$- und $R_2SiO$-Einheiten oder Organopolysiloxan aus $R_3SiO_{1/2}$- und $SiO_{4/2}$-Einheiten sowie gegebenenfalls $R_2SiO$-Einheiten, wobei R die oben dafür angegebene Bedeutung hat.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl- und tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R sind Cyanalkylreste, wie der β-Cyanethylrest; und halogenierte Kohlenwasserstoffreste, beispielsweise Halogenalkylreste, wie 3-Chlor-n-propylrest, Chlormethylrest, der 3,3,3-Trifluor-n-propylrest, der 2,2,2',2',2'-Hexafluorisopropylrest, der Heptafluorisopropylrest, Perfluorhexyl-ethyl-rest, Halogenarylreste, wie der o-, m- und p-Chlorphenylrest, und der Tetrafluorethyloxy-propyl-rest.

Beispiele für Reste $R^1$ sind Alkylreste, wie der Methyl-, Ethyl-, n-Propyl-, iso-Propyl-, n-Butyl-, iso-Butyl- und tert.-Butylrest.

Beispiele für substituierte Reste $R^1$ sind der Methoxyethylund Ethoxyethylrest.

Besonders bevorzugt werden als Organopolysiloxane (1) lineare Diorganopolysiloxane der Formel (II), insbesondere Dimethylpolysiloxane, mit einer Viskosität von 100 bis 100 000 mPa·s bei 25°C eingesetzt.

Es kann eine Art von Organopolysiloxan (1) oder auch ein Gemisch aus mindestens zwei verschiedenen Arten von Organopolysiloxanen (1) eingesetzt werden.

Zur Herstellung der für die Zubereitung der erfindungsgemäßen Treibmittelzusammensetzungen (a) eingesetzten wäßrigen Emulsionen werden Organopolysiloxane (1) nach den in der Silicon-Chemie üblichen Verfahren mit Wasser unter Zusatz von Emulgatoren emulgiert. Dabei kann der Emulgator, seiner chemischen Beschaffenheit entsprechend, sowohl in der Wasserphase als auch in der Ölphase vorgelegt werden. Der Emulgierschritt kann in üblichen, zur Herstellung von Emulsionen geeigneten Mischgeräten, wie schnellaufenden Stator-Rotor-Rührgeräten nach Prof. P. Willems, wie sie unter dem registrierten Warenzeichen "Ultra-Turrax" bekannt sind, erfolgen.

Werden zur Herstellung der wäßrigen Emulsionen bei Raumtemperatur feste Organopolysiloxane, insbesondere solche der Formel (IV), eingesetzt, werden die Emulsionen vorzugsweise nach der in US-A 5,039,724 beschriebenen Verfahrensweise zubereitet. Danach werden bei Raumtemperatur feste Organopolysiloxane in bei Raumtemperatur flüssigen, niedermolekularen Organopolysiloxanen gelöst und diese Lösungen mit Wasser unter Zusatz von Emulgatoren sowie gegebenenfalls weiteren Stoffen emulgiert. Das Lösen der bei Raumtemperatur festen Organopolysiloxane in den bei Raumtemperatur flüssigen Organopolysiloxanen sowie der Emulgierschritt kann in üblichen, zur Herstellung von Emulsionen geeigneten Mischgeräten erfolgen.

Bei der Herstellung der wäßrigen Emulsionen können als Emulgatoren (2) alle bisher bekannten, ionischen und nicht-ionischen Emulgatoren sowohl einzeln als auch in Mischungen verschiedener Emulgatoren eingesetzt werden, mit denen auch bisher beständige wäßrige Emulsionen von Organopolysiloxanen hergestellt werden konnten. Es können auch solche Emulgiermittel, wie sie in US-A 4 757 106 beschrieben sind, eingesetzt werden. Vorzugsweise werden nicht-ionische oder anionische Emulgatoren oder Gemische von nicht-ionischen und anionischen Emulgatoren eingesetzt. Als nicht-ionische Emulgatoren werden bevorzugt Fettalkoholpolyglycolether oder teilverseifte Polyvinylalkohole eingesetzt. Fettalkoholpolyglycolether sind beispielsweise unter dem Handelsnamen "Arlypon SA4" oder "Arlypon IT16" bei der Fa. Grünau und teilverseifte Polyvinylalkohole beispielsweise unter dem Handelsnamen "Polyviol W25/140" bei der Fa. Wacker erhältlich. Als anionische Emulgatoren werden Alkylsulfate, Alkylbenzolsulfonate oder Alkylsulfonate eingesetzt.

Als Verdickungsmittel (4) werden vorzugsweise Siliciumdioxide mit einer BET-Oberfläche von mindestens 50 m²/g, bevorzugt 50 bis 400 m²/g, besonders bevorzugt 100 bis 200 m²/g, wie pyrogen hergestellte Kieselsäuren oder gefällte Kieselsäuren, die gegebenenfalls ganz oder teilweise hydrophobiert sind, eingesetzt. Weitere Beispiele für Verdickungsmittel (4) sind hochverzweigte Polyacrylsäuren mit einer Viskosität von 5 000 bis 50 000 mPa·s bei 25°C, beispielsweise unter dem Handelsnamen "Carbopol" bei der Fa. B.F. Goodrich Chemical erhältlich, Celluloseether mit einer Viskosität von 5 000 bis 50 000 mPa·s bei 25°C, wie Hydroxyethylcellulose und Carboxymethylcellulose, beispielsweise unter dem Handelsnamen "Tylose" bei der Fa. Hoechst erhältlich, und Xanthane mit einer Viskosität von 5 000 bis 50 000 mPa·s bei 25°C, beispielsweise unter dem Handelsnamen "Kelzan" bei der Fa. G.M.Langer erhältlich.

Vorzugsweise werden die Verdickungsmittel als Pulver oder Granulat durch stetiges Einrühren in die wäßrigen Siliconemulsionen umfassend Organopolysiloxane (1), Emulgatoren (2) und Wasser (3) gleichmäßig verteilt. Das Einrühren und Vermischen erfolgt bei einer Temperatur von vorzugsweise 5 bis 40°C, bevorzugt 15 bis 30°C, und bei einem Druck von vorzugsweise 800 bis 1200 hPa, bevorzugt 1000 bis 1020 hPa. Das Einrühren und Vermischen kann in beliebigen Behältern und in beliebiger Größenordnung durchgeführt werden, vorzugsweise in Mischaggregaten ohne große Scherwirkung.

Die Treibmittelzusammensetzungen (a) enthalten

10 bis 50 Gew.-%, bevorzugt 15 bis 40 Gew.-%, Organopolysiloxane (1),
1 bis 7 Gew.-%, bevorzugt 2 bis 6 Gew.-%, Emulgatoren (2)
20 bis 80 Gew.-%, bevorzugt 30 bis 70 Gew.-%, Wasser (3) und .
5 bis 40 Gew.-%, bevorzugt 10 bis 20 Gew.-%, Verdickungsmittel. (4) .

Als Diorganopolysiloxane (b) können bei den erfindungs-gemäßen Massen alle Diorganopolysiloxane eingesetzt werden, die auch bisher mittels Radikalbildung oder durch Anlagerung von Si-gebundenem Wasserstoff an Si-gebundene Alkenylgruppen zu elastomeren Schaumstoffen gehärtet werden konnten.

Als Diorganopolysiloxane (b) werden bei den erfindungsgemäßen Massen vorzugsweise solche der allgemeinen Formel

$$Z_n R^2_{3-n} SiO \left( R^2_2 SiO \right)_m SiR^2_{3-n} Z_n ,$$ (V)

eingesetzt,

wobei $R^2$ gleich oder verschieden ist, einen einwertigen,
gegebenenfalls substituierten Kohlenwasserstoffrest mit 1 bis 18 Kohlenstoffatomen je Rest,
Z eine Hydroxylgruppe,
n 0 oder 1,
m eine ganze Zahl mit einem solchen Wert bedeutet, daß die durchschittliche Viskosität dieser Diorganopolysiloxane $1 \cdot 10^6$ bis $1 \cdot 10^9$ mPa·s bei 25°C, bevorzugt $5 \cdot 10^6$ bis $1 \cdot 10^8$ mPa·s bei 25°C, beträgt.

Innerhalb der bzw. entlang den Siloxanketten der vorstehend angegebenen Formel (V) können, was bei derartigen Formeln üblicherweise nicht dargestellt wird, zusätzlich zu den Diorganosiloxaneinheiten

$$\left( SiR^2_2 O \right) ,$$

noch andere Siloxaneinheiten vorliegen. Beispiele für solche anderen, meist lediglich als Verunreinigungen vorliegenden Siloxaneinheiten sind solche der Formeln $R^2 SiO_{3/2}$,

$$R^2_3 SiO_{1/2}$$

und $SiO_{4/2}$, wobei $R^2$ jeweils die oben dafür angegebene Bedeutung hat. Die Menge an solchen anderen Siloxaneinheiten als Diorganosiloxaneinheiten beträgt jedoch vorzugsweise höchstens 10 Molprozent, insbesondere höchstens 1 Molprozent, jeweils bezogen auf das Gewicht von Diorganopolysiloxan (1).

Beispiele für Reste $R^2$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste $R^2$ sind Cyanalkylreste, wie der β-Cyanethylrest; und halogenierte Kohlenwasserstoffreste, beispielsweise Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m- und p-Chlorphenylrest.

Der überwiegende Teil der Reste $R^2$ besteht vor allem wegen der leichten Zugänglichkeit vorzugsweise aus Methylresten. Die gegebenenfalls vorhandenen übrigen Reste sind bevorzugt Vinylreste. Wenn die Massen durch Radikalbildung zu Elastomeren härtbar sind, enthalten die Diorganopolysiloxane (b) dann vorzugsweise 0 bis 3 Gew.-%, bevorzugt 0 bis 0,5 Gew.-% Si-gebundene Vinylgruppen. Die gegebenenfalls vorhandenen Vinylgruppen können sich dabei am Kettenende in den beiden endständigen Einheiten

$$R^2_3 SiO_{1/2}$$

und/oder innerhalb der Kette in den

$$R^2_2 SiO-$$

Einheiten der oben angegebenen Formel (V) befinden.

Wenn n den Wert 0 hat und die Massen durch die Anlagerung von Si-gebundenem Wasserstoff an Si-gebundene Alkenylgruppen zu Elastomeren härtbar sind, müssen in den Diorganopolysiloxanen (b) der oben angegebenen Formel (V) mindestens zwei der Reste $R^2$ je Molekül Alkenylreste, bevorzugt Vinylreste, sein. Die Alkenylreste, bevorzugt Vinylreste, befinden sich dabei vorzugsweise in den beiden endständigen Einheiten

$$R^2_3 SiO_{1/2}$$

und/oder innerhalb der Kette in den

$$R^2_2 SiO-$$

Einheiten der oben angegebenen Formel (V). Sind die Alkenylreste Vinylreste, enthalten die Diorganopolysiloxane (b) vorzugsweise 0,01 bis 10 Gew.-%, bevorzugt 0,03 bis 5 Gew.-%, Vinylgruppen.

Es kann eine Art von Diorganopolysiloxan (b), es kann auch ein Gemisch aus mindestens zwei verschiedenen Arten von Diorganopolysiloxanen (b) eingesetzt werden.

Vorzugsweise werden Treibmittelzusammensetzungen (a) in Mengen von 0,5 bis 8 Gew.-%, bevorzugt 1 bis 5 Gew.-%, jeweils bezogen auf das Gesamtgewicht von eingesetzten Diorganopolysiloxanen (b) in den erfindungsgemäßen Massen eingesetzt.

Erfolgt die Vernetzung der erfindungsgemäßen Massen mittels freier Radikale, werden als Vernetzungsmittel (c) organische Peroxide, die als Quelle für freie Radikale dienen, eingesetzt. Beispiele für organische Peroxide sind Acylperoxide, wie Dibenzoylperoxid, Bis-(4-chlorbenzoyl)-peroxid, Bis(2,4-dichlorbenzoyl)-peroxid und Bis-(4-methylbenzoyl)-peroxid; Alkylperoxide und Arylperoxide, wie Di-tert.-butylperoxid, 2,5-Bis-(tert.-butylperoxy)-2,5-dimethylhexan, Dicumylperoxid und 1,3-Bis-(tert.-butylperoxy-isopropyl)-benzol; Perketale, wie 1,1-Bis-(tert.-butylperoxy)-3,3,5-trimethylcyclohexan; Perester, wie Diacetylperoxydicarbonat, tert.-Butylperbenzoat, Tert.-butylperoxy-isopropylcarbonat, Tert.-butylperoxy-isononanoat, Dicyclohexylperoxydicarbonat und 2,5-Dimethylhexan-2,5-diperbenzoat.

Es kann eine Art von organischem Peroxid (c), es kann auch ein Gemisch von mindestens zwei verschiedenen Arten von organischen Peroxiden (c) eingesetzt werden.

Vorzugsweise werden Peroxide in Mengen von 1 bis 5 Gew.-%, bevorzugt 2 bis 3,5 Gew.-%, jeweils bezogen auf das Gesamtgewicht der eingesetzten Diorganopolysiloxane (b), in den erfindungsgemäßen Massen eingesetzt.

Erfolgt die Vernetzung der erfindungsgemäß hergestellten Massen durch Anlagerung von Si-gebundenem Wasserstoff an Si-gebundene Alkenylgruppen in Gegenwart von diese Anlagerung fördernden Katalysatoren werden als Vernetzungsmittel (c) Organopolysiloxane mit mindestens 2 Si-gebundenen Wasserstoffatomen je Molekül eingesetzt. Vorzugsweise werden lineare, cyclische

oder verzweigte Organopolysiloxane aus Einheiten der allgemeinen Formel

$$R_k^2 H_l SiO_{\frac{4-k-l}{2}} \, , \qquad\qquad (VI)$$

wobei $R^2$ die oben dafür angegebene Bedeutung hat, k 0, 1, 2 oder 3, l 0 oder 1 und die Summe k+l 0, 1, 2 oder 3 bedeutet, mit der Maßgabe, daß je Molekül mindestens 2, bevorzugt mindestens 3, Si-gebundene Wasserstoffatome enthalten sind, eingesetzt. Bevorzugt werden Organopolysiloxane der allgemeinen Formel

$$H_g R_{3-g}^2 SiO\left( R^2 SiO \right)_o \left( R^2 HSiO \right)_p SiR_{3-g}^2 H_g \, , \qquad\qquad (VII)$$

wobei $R^2$ die oben dafür angegebene Bedeutung hat, g 0 oder 1,
o eine ganze Zahl und p 0 oder eine ganze Zahl bedeutet, wobei die Summe o+p eine ganze Zahl mit einem solchen Wert bedeutet, daß die durchschnittliche Viskosität der Organopolysiloxane vorzugsweise 5 bis 1 000 mPa·s bei 25°C, bevorzugt 10 bis 500 mPa·s bei 25°C, beträgt, mit der Maßgabe, daß je Molekül mindestens 2, bevorzugt mindestens 3, Si-gebundene Wasserstoffatome enthalten sind, eingesetzt. Die Organopolysiloxane mit mindestens 2 Si-gebundenen Wasserstoffatomen enthalten vorzugsweise 0,1 bis 1,7 Gew.-%, bevorzugt 0,4 bis 1,2 Gew.-%, Si-gebundenen Wasserstoff.

Organopolysiloxane mit mindestens 2 Si-gebundenen Wasserstoffatomen je Molekül werden vorzugsweise in Mengen von 0,5 bis 10, bevorzugt 1 bis 5, Grammatom Si-gebundenen Wasserstoffs je Mol Si-gebundener Vinylgruppen in den Diorganopolysiloxanen (b) eingesetzt.

Als Katalysatoren (d), die die Anlagerung von Si-gebundenem Wasserstoff an Si-gebundene Alkenylgruppen fördern, wird vorzugsweise ein Metall aus der Gruppe der Platinmetalle oder eine Verbindung oder ein Komplex aus der Gruppe der Platinmetalle eingesetzt. Beispiele für solche Katalysatoren sind metallisches und feinverteiltes Platin, das sich auf Trägern wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6 \cdot 6H_2O$, $Na_2PtCl_4 \cdot 4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6 \cdot 6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid, Cyclooctadien-Platindichlorid, Norbornadien-Platindichlorid, Gamma-picolin-Platindichlorid, Cyclopentadien-Platindichlorid sowie Umsetzungsprodukte von Platintetrachlorid mit Olefin und primärem Amin oder sekundärem Amin oder primärem und sekundärem Amin gemäß US-A 4,292,434, wie das Umsetzungsprodukt aus in 1-Octen gelöstem Platintetrachlorid mit sec.-Butylamin, oder Ammonium-Platinkomplexe gemäß EP-B 110 370.

Der Katalysator (d) wird vorzugsweise in Mengen von 0,5 bis 200 Gew.-ppm (Gewichtsteilen je Million Gewichtsteilen), bevorzugt in Mengen von 2 bis 50 Gew.-ppm, jeweils berechnet als elementares Platin und bezogen auf das Gesamtgewicht von eingesetzten Organopolysiloxanen, verwendet.

Bei der Vernetzung der Massen durch Anlagerung von Si-gebundenem Wasserstoff an Si-gebundene Alkenylgruppen in Gegenwart von diese Anlagerung fördernden Katalysatoren können die Massen Inhibitoren enthalten. Beispiele für Inhibitoren sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung gemäß US-A 3,445,420, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, Inhibitoren gemäß US-A 2,476,166, wie eine Mischung aus Diallylmaleinat und Vinylacetat, und Inhibitoren gemäß US 4,504,645, wie Maleinsäuremonoester.

Die nach dem erfindungsgemäßen Verfahren erhaltenen Massen können sowohl verstärkende als auch nicht verstärkende Füllstoffe (e) enthalten.

Beispiele für verstärkende Füllstoffe (e), also Füllstoffe mit einer BET-Oberfläche von mindestens 50 $m^2/g$, sind pyrogen hergestellte Siliciumdioxide, gefällte Siliciumdioxide, Ruß, wie Furnace- und Acetylenruß und Silicium-Aluminium-Mischoxide großer BET-Oberfläche; faserförmige Füllstoffe, wie Asbest, Graphitfasern sowie Kunststofffasern.

Beispiele für nicht verstärkende Füllstoffe, also Füllstoffe mit einer BET-Oberfläche von bis zu 50 $m^2/g$, sind Quarz, Diatomeenerde, Calciumsilikat, Zirkoniumsilikat, Zeolithe, Montmorrillonite, wie Bentonite, Metalloxidpulver, wie Aluminium-, Magnesium-, Titan-, Eisen-, Zink-, Mangan- oder Ceroxide bzw. deren Mischoxide, Bariumsulfat, Calciumcarbonat, Gips, Siliciumnitrid, Siliciumcarbid, Bornitrid, Glas- und Kunststoffpulver und Mischungen aus Teflon, Graphit und Ruß.

Die genannten Füllstoffe können hydrophobiert sein, beispielsweise durch die Behandlung mit Organosiliciumverbindungen, wie Hexamethyldisilazan, Organosilanen oder Organosiloxanen, oder durch Verätherung von Hydroxylgruppen zu Alkoxygruppen. Es kann eine Art von Füllstoff (e), es kann auch ein Gemisch von mindestens zwei Arten von Füllstoffen (e) eingesetzt werden.

Vorzugsweise werden Füllstoffe (e) in Mengen von 10 bis 120 Gew.-%, bevorzugt 25 bis 80 Gew.-%, jeweils bezogen auf das Gesamtgewicht der eingesetzten Diorganopolysiloxane, in den erfindungsgemäßen Massen eingesetzt.

In den nach dem erfindungsgemäßen Verfahren erhaltenen Massen können noch weitere Zusatzstoffe, die üblicherweise bei der Herstellung von zu elastomeren Schaumstoffen vernetzbaren Massen verwendet werden, enthalten sein, wie Weichmacher, beispielsweise Diorganopolysiloxane der allgemeinen Formel

$$\left(R^1O\right)_u R_{3-u}^2 SiO\left(SiR_2^2 O\right)_v SiR_{3-u}^2\left(OR^1\right)_u , \qquad\qquad (VIII)$$

wobei $R^1$ und $R^2$ die oben dafür angegebene Bedeutung haben,
u 0 oder 1 und v eine ganze Zahl mit einem solchen Wert bedeutet, daß die durchschnittliche Viskosität der Diorganopolysiloxane 10 bis 500 mPa·s bei 25°C beträgt, anorganische oder organische Pigmente, Antioxidantien, Hitzestabilisatoren, Mittel zur Verbesserung der elektrischen Eigenschaften, Antihydrolyseadditive, sogenannte Reversionstabilisatoren, und Schwerbrennbarkeitsadditive.

Die einzelnen Bestandteile, die für das erfindungsgemäße Verfahren verwendet werden, können auf beliebige Weise miteinander vermischt werden, beispielsweise in Rührwerken, Mischern, Knetern oder Walzwerken.

Die Treibmittelzusammensetzungen (a) werden getrennt von den anderen Bestandteilen gelagert.

Die Herstellung von Formkörpern aus zu elastomeren Siliconschaumstoffen härtbaren Massen kann drucklos durch Extrusion oder Kalandrieren, beispielsweise mit anschließender Vulkanisation als Walzenfell, oder unter Druck durch Kalandrieren, beispielsweise mit anschließender Vulkanisation in einer AUMA (AUMA = kontinuierliche Vulkanisation unter Druck zwischen einer Stahltrommel und einem Stahlband), Formverschäumung, wie Transferpressen oder HTV-Spritzguß, oder Herstellung eines Walzenfells mit anschließender Formverschäumung, erfolgen.

Erfolgt die Vernetzung der Massen durch organische Peroxide, wird die Härtung unter gleichzeitiger Verschäumung vorzugsweise bei Temperaturen von 120 bis 250°C durchgeführt.

Erfolgt die Vernetzung der Massen durch organische Peroxide und erfolgt die Verarbeitung der Massen drucklos, werden als organische Peroxide bevorzugt Dibenzoylperoxid, Bis-(4-chlorbenzoyl)-peroxid, Bis-(2,4-dichlorbenzoyl)-peroxid oder Bis-(4-methylbenzoyl)-peroxid eingesetzt und die Härtung erfolgt unter gleichzeitiger Verschäumung bevorzugt bei Temperaturen im Bereich von 160 bis 230°C.

Erfolgt die Vernetzung der Massen durch organische Peroxide und erfolgt die Verarbeitung der Massen unter Druck, werden als organische Peroxide bevorzugt tert.-Butylperbenzoat, Dicumylperoxid, Tert.-butylperoxy-isopropylcarbonat oder 2,5-Bis-(tert.-butylperoxy)-2,5-dimethylhexan eingesetzt und die Härtung erfolgt unter gleichzeitiger Verschäumung bevorzugt bei Temperaturen im Bereich von 130 bis 200°C.

Erfolgt die Vernetzung der Massen durch Anlagerung von Si-gebundenem Wasserstoff an Si-gebundene Alkenylgruppen in Gegenwart von diese Anlagerung fördernden Katalysatoren, wird die Härtung unter gleichzeitiger Verschäumung bei Temperaturen von vorzugsweise 100 bis 250°C durchgeführt. Bei druckloser Verarbeitung erfolgt die Härtung vorzugsweise bei 100 bis 230°C, bei Verarbeitung unter Druck erfolgt die Härtung bei 130 bis 250°C.

Die nach dem erfindungsgemäßen Verfahren erhaltenen Massen können verwendet werden zur Herstellung von geschäumten Rundschnüren, geschäumten Dichtungsprofilen, geschäumten Isolierschläuchen, geschäumten Matten und Kissen, geschäumten Dämpfungselementen, geschäumten Stopfen, geschäumten Dichtungen und geschäumten Walzenbelegungen.

In den folgenden Beispielen beziehen sich alle Angaben von Teilen und Prozentsätzen auf das Gewicht, soweit nichts anderes angegeben ist.

**Herstellung der Treibmittelzusammensetzungen A bis M:**

a) In 100 Teile einer Öl-in-Wasser-Emulsion, die 35 Gew.-% eines durch Trimethylsiloxygruppen endblockierten Dimethylpolysiloxans mit einer Viskosität von 350 mPa·s bei 25°C, 60 Gew.-% Wasser und 5 Gew.-% eines Fettalkoholpolyglycolethers (käuflich erwerblich unter dem Handelsnamen "Arlypon IT 10" bei der Fa. Grünau) enthielt, wurden 16 Teile einer hydrophilen, pyrogenen Kieselsäure mit einer BET-Oberfläche von 150 m$^2$/g (käuflich erwerblich unter dem Handelsnamen "HDK V15" bei der Fa. Wacker-Chemie) langsam eingerührt, bis eine homogene Paste entstanden war. Es wurde eine Treibmittelzusammensetzung A erhalten.

b) In 100 Teile einer Öl-in-Wasser-Emulsion, die 35 Gew.-% eines durch Trimethylsiloxygruppen endblockierten Dimethylpolysiloxans mit einer Viskosität von 100 000 mPa·s bei 25°C, 59 Gew.-% Wasser, 3 Gew.-% eines Fettalkoholpolyglycolethers (käuflich erwerblich unter dem Handelsnamen "Arlypon IT 10" bei der Fa. Grünau) und 3 Gew.-% Natrium-Dodecylbenzolsulfonat enthielt, wurden 18 Teile einer hydrophilen, pyrogen hergestellten Kieselsäure mit einer BET-Oberfläche von 150 m$^2$/g (käuflich erwerblich unter dem Handelsnamen "HDK V15" bei der Fa. Wacker-Chemie) langsam eingerührt, bis eine homogene Paste entstanden war. Es wurde eine Treibmittelzusammensetzung B erhalten.

c) In 100 Teile einer Öl-in-Wasser-Emulsion, die 35 Gew.-% eines durch Trimethylsiloxygruppen endblockierten Dimethylpolysiloxans mit einer Viskosität von 12 500 mPa·s bei 25°C, 59 Gew.-% Wasser, 3 Gew.-% Alkylsulfat (käuflich erwerblich unter dem Handelsnamen "Genapol CRT 40" bei der Fa. Hoechst AG) und 3 Gew.-% Natriumalkylsulfonat (käuflich erwerblich unter dem Handelsnamen "Emulgator K30" bei der Fa. Interorgana) enthielt, wurden 16 Teile einer hydrophilen, pyrogen hergestellten Kieselsäure mit einer BET-Oberfläche von 150 m$^2$/g (käuflich erwerblich unter dem Handelsnamen "HDK V15" bei der Fa. Wacker-Chemie) langsam eingerührt, bis eine homogene Paste entstanden war. Es wurde eine Treibmittelzusammensetzung C erhalten.

d) In 100 Teile einer Öl-in-Wasser-Emulsion, die 30 Gew.-% eines Organopolysiloxans aus 20 Mol-% Methyl-(phenylethyl)-siloxy-Einheiten und 80 Mol-% Methyldodecyl-siloxy-Einheiten mit einer Viskosität von 1 000 mPa·s bei 25°C, 65 Gew.-% Wasser und 5 Gew.-% Fettalkoholpolyglycolether (käuflich erwerblich unter dem Handelsnamen "Arlypon IT 10" bei der Fa. Grünau) enthielt, wurden 12 Teile einer hydrophilen, pyrogen hergestellten Kieselsäure mit einer BET-Oberfläche von 150 m$^2$/g (käuflich erwerblich unter dem Handelsnamen "HDK V15" bei der Fa. Wacker-Chemie) langsam eingerührt, bis eine homogene Paste entstanden war. Es wurde eine Treibmittelzusammensetzung D erhalten.

e) In 100 Teile einer oben unter a) beschriebenen Öl-in-Wasser-Emulsion wurden 20 Teile einer hydrophobierten, pyrogen hergestellten Kieselsäure mit einer BET-Oberfläche von 200 m$^2$/g (käuflich erwerblich unter dem Handelsnamen "HDK H20" bei der Fa. Wacker-Chemie) langsam eingerührt, bis eine homogene Paste entstanden war. Es wurde eine Treibmittelzusammensetzung E erhalten.

f) In 100 Teile einer oben unter a) beschriebenen Öl-in-Wasser-Emulsion wurden 18 Teile einer hydrophilen, pyrogen hergestellten Kieselsäure mit einer BET-Oberfläche von 300 m$^2$/g (käuflich erwerblich unter dem Handelsnamen "HDK T30" bei der Fa. Wacker-Chemie) langsam eingerührt, bis eine homogene Paste entstanden war. Es wurde eine Treibmittelzusammensetzung F erhalten.

g) In 100 Teile einer Öl-in-Wasser-Emulsion, die 35 Gew.-% Polymethylsilsesquioxan mit insgesamt 10 Mol-% Hydroxylund Ethoxygruppen, 60 Gew.-% Wasser und 5 Gew.-% teilverseiften Polyvinylalkohol (käuflich erwerblich unter dem Handelsnamen "Polyviol W25/140" bei der Fa. Wacker-Chemie) enthielt, wurden 16 Teile einer hydrophilen, pyrogen hergestellten Kieselsäure mit einer BET-Oberfläche von 150 m$^2$/g (käuflich erwerblich unter dem Handelsnamen "HDK V15" bei der Fa. Wacker-Chemie) langsam eingerührt, bis eine homogene Paste entstanden war. Es wurde eine Treibmittelzusammensetzung G erhalten.

h) In 100 Teile einer Öl-in-Wasser-Emulsion, die 50 Gew.-% eines Siliconharzes aus 25 Mol-% Polydimethylsiloxaneinheiten und 75 Mol-% Polymethylsilsesquioxaneinheiten mit insgesamt 10 Mol-% Hydroxyl- und Ethoxygruppen, 45 Gew.-% Wasser und 5 Gew.-% Fettalkoholpolyglycolether (käuflich erwerblich unter dem Handelsnamen "Arlypon IT16" bei der Fa. Grünau) enthielt, wurden 14 Teile einer hydrophilen, pyrogen hergestellten Kieselsäure mit einer BET-Oberfläche von 150 $m^2$/g (käuflich erwerblich unter dem Handelsnamen "HDK V15" bei der Fa. Wacker-Chemie) langsam eingerührt, bis eine homogene Paste entstanden war. Es wurde eine Treibmittelzusammensetzung H erhalten.

k) In 100 Teile einer Öl-in-Wasser-Emulsion, die 30 Gew.-% eines durch Trimethylsiloxygruppen endblockierten Dimethylpolysiloxans mit einer Viskosität von 12 500 mPa·s bei 25°C, 2 Gew.-% eines Siliconharzes der durchschnittlichen Zusammensetzung $[(Me_3SiO_{1/2})_{0,7}(SiO_{4/2})_{1,0}(OEt)_{0,04}(OH)_{0,01}]_{30}$, 65 Gew.-% Wasser und 3 Gew.-% eines Fettalkoholpolyglycolethers (käuflich erwerblich unter dem Handelsnamen "Arlypon IT16" bei der Fa. Grünau) enthielt, wurden 18 Teile einer hydrophilen, pyrogenen Kieselsäure mit einer BET-Oberfläche von 150 $m^2$/g (käuflich erwerblich unter dem Handelsnamen "HDK V15" bei der Fa. Wacker-Chemie) langsam eingerührt, bis eine homogene Paste entstanden war. Es wurde eine Treibmittelzusammensetzung K erhalten.

1) In 100 Teile einer oben unter a) beschriebenen Öl-in-Wasser-Emulsion wurden 35 Teile einer hydrophilen, gefällten Kieselsäure mit einer BET-Oberfläche von 170 $m^2$/g (käuflich erwerblich unter dem Handelsnamen "Ultrasil VN3" bei der Fa. Degussa) langsam eingerührt, bis eine homogene Paste entstanden war. Es wurde eine Treibmittelzusammensetzung L erhalten.

m) In 100 Teile einer oben unter a) beschriebenen Öl-in-Wasser-Emulsion wurden 30 Teile einer hydrophobierten, gefällten Kieselsäure mit einer BET-Oberfläche von 100 $m^2$/g (käuflich erwerblich unter dem Handelsnamen "Sipernat D17" bei der Fa. Degussa) langsam eingerührt, bis eine homogene Paste entstanden war. Es wurde eine Treibmittelzusammensetzung M erhalten.

**Beispiel 1:**

In 100 Teile einer HTV-Siliconkautschukmischung, die 67 Teile eines durch Trimethylsiloxygruppen endblockierten Dimethylpolysiloxans mit einer Viskosität von $10^7$ mPa·s bei 25°C, 10 Teile eines durch Trimethylsiloxygruppen endblockierten Dimethylpolysiloxans mit einer Viskosität von 35 mPa·s bei 25°C und 23 Teile einer hydrophilen, pyrogen hergestellten Kieselsäure mit einer BET-Oberfläche von 130 $m^2$/g (käuflich erwerblich unter dem Handelsnamen "HDK S13" bei der Fa. Wacker-Chemie) enthielt, wurden 1,5 Teile der Treibmittelzusammensetzung A und 0,5 Teile einer Paste aus gleichen Teilen Bis-(2,4-Dichlorbenzoyl)-peroxid und eines durch Trimethylsiloxygruppen endblockierten Dimethylpolysiloxans mit einer Viskosität von 350 mPa·s bei 25°C (käuflich erwerblich unter dem Handelsnamen "Vernetzer E" bei der Fa. Wacker-Chemie) und 1,7 Teile einer Paste aus gleichen Teilen Dibenzoylperoxid und eines durch Trimethylsiloxygruppen endblockierten Dimethylpolysiloxans mit einer Viskosität von 350 mPa·s bei 25°C (käuflich erwerblich unter dem Handelsnamen "Vernetzer B" bei der Fa. Wacker-Chemie) auf einer Walze eingemischt. Die entstandene Mischung wurde anschließend zu Schaumprofilen oderschläuchen extrudiert und im Heißluftkanal vulkanisiert. Bei einer Düsengröße des Extruders von 8 mm Durchmesser (Rundschnur), einer Vulkanisationsdauer von 5 Minuten bei 200°C und einer Ausstoßleistung von ca. 1,5 m/min wurde eine homogen geschäumte Rundschnur mit einem Durchmesser von 13 mm und mit runden Poren, homogener Porengrößenverteilung und einer Schaumdichte von 0,6 erhalten.

**Beispiel 2:**

In 100 Teile einer HTV-Siliconkautschukmischung, die 75 Teile eines durch Trimethylsiloxygruppen endblockierten Dimethylpolysiloxans mit einer Viskosität von $10^7$ mPa·s bei 25°C und 25 Teile hydrophile, pyrogen hergestellte Kieselsäure mit einer BET-Oberfläche von 150 $m^2$/g enthält, wurden 2 Teile Treibmittelzusammensetzung B, 0,5 Teile des in Beispiel 1 beschriebenen "Vernetzers E" und 1,7 Teile des in Beispiel 1 beschriebenen "Vernetzers B" auf einer Walze eingemischt. Die entstandene Mischung wurde anschließend zu Schaumprofilen oder -schläuchen extrudiert und im Heißluftkanal vulkanisiert. Bei einer Düsengröße des Extruders von 10 mm Durchmesser (Rundschnur), einer Vulkanisationsdauer von 5 Minuten bei 180°C und einer Ausstoßleistung von ca. 1,5 m/min wurde eine homogen geschäumte Rundschnur mit einem Durchmesser von 19 mm und einer Schaumdichte von 0,4 erhalten.

**Beispiel 3:**

In einer Mischung aus 50 Teilen der in Beispiel 1 beschriebenen HTV-Siliconkautschukmischung und 50 Teilen der in Beispiel 2 beschriebenen HTV-Siliconkautschukmischung wurden 2 Teile Treibmittelzusammensetzung H, 0,5 Teile des in Beispiel 1 beschriebenen "Vernetzers E" und 1,7 Teile des in Beispiel 1 beschriebenen "Vernetzers B" auf einer Walze eingemischt. Die entstandene Mischung wurde anschließend zu Schaumprofilen oder -schläuchen extrudiert und im Heißluftkanal vulkanisiert. Bei einer Düsengröße des Extruders von 15 mm Durchmesser (Rundschnur), einer Vulkanisationsdauer von 5 Minuten bei 200°C und einer Ausstoßleistung von ca. 1,5 m/min wurde eine homogen geschäumte Rundschnur mit einem Durchmesser von 24 mm und einer Schaumdichte von 0,5 erhalten.

**Beispiel 4:**

In 100 Teile der in Beispiel 1 beschriebenen HTV-Siliconkautschukmischung wurden 1,5 Teile Treibmittelzusammensetzung L und 2 Teile des in Beispiel 1 beschriebenen "Vernetzers B" auf einer Walze eingemischt. Die entstandene Mischung wurde anschließend zu Schaumprofilen oder -schläuchen extrudiert und im Heißluftkanal vulkanisiert. Bei einer Düsengröße des Extruders von 10 mm Durchmesser (Rundschnur), einer Vulkanisationsdauer von 5 Minuten bei 220°C und einer Ausstoßleistung von ca. 1,5 m/min wurde eine homogen geschäumte Rundschnur mit einem Durchmesser von 13 mm und einer Schaumdichte von 0,7 erhalten.

**Beispiel 5:**

In 100 Teile der in Beispiel 1 beschriebenen HTV-Siliconkautschukmischung wurden 1,5 Teile Treibmittelzusammensetzung C und 2 Teile Bis-(4-methylbenzoyl)-peroxid (käuflich erwerblich unter dem Handelsnamen "Interox PMBP" bei der Fa. Peroxid-Chemie) auf einer Walze eingemischt. Die entstandene Mischung wurde anschließend zu Schaumprofilen oder -schläuchen extrudiert und im Heißluftkanal vulkanisiert. Bei einer Düsengröße des Extruders von 8 mm Durchmesser (Rundschnur), einer Vulkanisationsdauer von 5 Minuten bei 200°C und einer Ausstoßleistung von ca. 1,5 m/min wurde eine homogen geschäumte Rundschnur mit einem Durchmesser von 14 mm und einer Schaumdichte von 0,6 erhalten.

**Beispiel 6:**

In 100 Teile einer HTV-Siliconkautschukmischung, die 49 Teile eines durch Trimethylsiloxygruppen endblockierten Dimethylpolysiloxans aus Dimethylsiloxan- und Methylvinylsiloxaneinheiten mit einer Viskosität von $2 \cdot 10^7$ mPa·s bei 25°C und 0,04 Gew.-% Si-gebundenen Vinylgruppen, 19 Teile eines durch Dimethylvinylsiloxygruppen endblockierten Dimethylpolysiloxans aus Dimethylsiloxan- und Methylvinylsiloxaneinheiten mit einer Viskosität von $2 \cdot 10^7$ mPa·s bei 25°C und 0,25 Gew.-% Si-gebundenen Vinylgruppen, 1,4 Teile eines durch Dimethylvinylsiloxygruppen endblockierten Dimethylpolysiloxans aus Dimethylsiloxan- und Methylvinylsiloxaneinheiten mit einer Viskosität von $8 \cdot 10^6$ mPa·s bei 25°C und 4,5 Gew.-% Si-gebundene Vinylgruppen, 3 Teile eines Mischpolymerisats aus Trimethylsiloxan-, Dimethylsiloxan- und Methylhydrogensiloxaneinheiten mit einer Viskosität von 50 mPa·s bei 25°C und 0,5 Gew.-% Si-gebundenen Wasserstoffatomen, 27,5 Teile hydrophile, pyrogen hergestellte Kieselsäure mit einer BET-Oberfläche von 300 m$^2$/g und 0,06 Teile Platin-1,3-Divinyl-1,1,3,3-tetramethyldisiloxan-Komplex mit einem Platingehalt von 1 Gew.-%, berechnet als elementares Platin, und 0,04 Teile Ethinylcyclohexanol enthielt, wurden 2 Teile Treibmittelzusammensetzung D auf einer Walze eingemischt. Die entstandene Mischung wurde anschließend zu Schaumprofilen oder -schläuchen extrudiert und im Heißluftkanal vulkanisiert. Bei einer Düsengröße des Extruders von 15 mm Durchmesser (Rundschnur), einer Vulkanisationsdauer von 5 Minuten bei 200°C und einer Ausstoßleistung von ca. 1,5 m/min wurde eine homogen geschäumte Rundschnur mit einem Durchmesser von 20 mm und einer Schaumdichte von 0,7 erhalten.

**Beispiel 7:**

In 100 Teile der in Beispiel 2 beschriebenen HTV-Siliconkautschukmischung wurden 2 Teile Treibmittelzusammensetzung A, 0,5 Teile des in Beispiel 1 beschriebenen "Vernetzers E" und 1,7 Teile des in Beispiel 1 beschriebenen "Vernetzers B" auf einer Walze eingemischt. Die entstandene Mischung wurde anschließend bei Raumtemperatur auf einem Zweiwalzen-Walzwerk zu einem Walzenfell von 7 mm Stärke verarbeitet und aus dem Walzenfell wurden Platten ausgestanzt. Nachdem die Plattenoberflächen mit einer Gewebeauflage fixiert wurden, wurden die Platten drucklos unter Heißluft bei einer Temperatur von 200°C 5 Minuten lang vulkanisiert. Es wurden homogen geschäumte Platten mit einer Dicke von 20 mm, ovalen Poren und einer Schaumdichte von 0,45 erhalten.

**Beispiel 8:**

In 100 Teile der in Beispiel 1 beschriebenen HTV-Siliconkautschukmischung wurden 1,5 Teile Treibmittelzusammensetzung A und 1 Teil Tert.-butylperbenzoat (käuflich erwerblich unter dem Handelsnamen "Trigonox C" bei der Fa. Peroxid-Chemie) auf einer Walze eingemischt. Die entstandene Mischung wurde anschließend bei Raumtemperatur auf einem Zweiwalzen-Walzwerk zu einem Walzenfell von 14 mm Stärke verarbeitet. Es wurde ein Fellabschnitt (15 cm x 15 cm x 1,4 cm) in eine quaderförmige Springform (15 cm x 15 cm x 3 cm) eingelegt. Die Springform wurde anschließend in eine Heißpresse gegeben und der Kautschuk wurde unter Druck 5 Minuten lang bei einer Temperatur von 140°C vulkanisiert. Es wurde ein homogen geschäumter Quader mit den Ausmaßen 15 cm x 15 cm x 3 cm, ovalen Poren und einer Schaumdichte von 0,55 erhalten.

**Beispiel 9:**

In 100 Teile der in Beispiel 1 beschriebenen HTV-Siliconkautschukmischung wurden 1,5 Teile Treibmittelzusammensetzung A, 0,25 Teile des in Beispiel 1 beschriebenen "Vernetzers B" und 0,35 Teile Dicumylperoxid (käuflich erwerblich unter dem Handelsnamen "Vernetzer C1" bei der Fa. Wacker-Chemie) auf einer Walze eingemischt. Die entstandene Mischung wurde anschließend bei Raumtemperatur auf einem Zweiwalzen-Walzwerk zu einem Walzenfell von 16 mm Stärke verarbeitet. Es wurde ein Fellabschnitt (15 cm x 15 cm x 1,6 cm) in eine quaderförmige Springform (15 cm x 15 cm x 3 cm) eingelegt. Die Springform wurde anschließend in eine Heißpresse gegeben und der Kautschuk wurde unter Druck 5 Minuten lang bei einer Temperatur von 140°C vulkanisiert. Es wurde ein homogen geschäumter Quader mit den Ausmaßen 15 cm x 15 cm x 3 cm, ovalen Poren und einer Schaumdichte von 0,65 erhalten.

**Beispiel 10:**

In 100 Teile einer HTVHTV-Siliconkautschukmischung, die 72 Teile eines durch Dimethylvinylsiloxygruppen endblockierten Dimethylpolysiloxans aus Dimethylsiloxan- und Methylvinylsiloxaneinheiten mit einer Viskosität von $2 \cdot 10^7$ mPa·s bei 25°C und 0,05 Gew.-% Si-gebundenen Vinylgruppen und 2 Teile eines durch Hydroxygruppen endblockierten Dimethylpolysiloxans mit einer Viskosität von 35 mPa·s bei 25°C und 26 Teile einer hydrophilen, pyrogen hergestellten Kieselsäure mit einer BET-Oberfläche von 150 m$^2$/g enthielt, wurden 10 Teile eines Eisen(III)-oxids (käuflich erwerblich unter dem Handelsnamen "Bayferrox 130B rot" bei der Fa. Bayer AG), 1,5 Teile der Treibmittelzusammensetzung A, 0,5 Teile des in Beispiel 1 beschriebenen "Vernetzers E" und 1,7 Teile des in Beispiel 1 beschriebenen "Vernetzers B" auf einer Walze eingemischt. Die entstandene Mischung wurde anschließend zu Schaumprofilen oder -schläuchen extrudiert und im Heißluftkanal vulkanisiert. Bei einer Düsengröße des Extruders von 8 mm Durchmesser (Rundschnur), einer Vulkanisationsdauer von 5 Minuten bei 200°C und einer Ausstoßleistung von ca. 1,5 m/min wurde eine homogen geschäumte Rundschnur mit einem Durchmesser von 14 mm und mit runden Poren, homogener Porengrößenverteilung und einer Schaumdichte von 0,6 erhalten.

**Beispiel 11:**

In 100 Teile der in Beispiel 10 beschriebenen HTV-Siliconkautschukmischung wurden 10 Teile eines silanisierten Quarzmehls (käuflich erwerblich unter dem Handelsnamen "Silbond 600 TST" bei den Quarzwerken Frechen), 1,5 Teile der Treibmittelzusammensetzung A, 0,5 Teile des in Beispiel 1 beschriebenen "Vernetzers E" und 1,7 Teile des in Beispiel 1 beschriebenen "Vernetzers B" auf einer Walze eingemischt. Die entstandene Mischung wurde anschließend zu Schaumprofilen oder -schläuchen extrudiert und im Heißluftkanal vulkanisiert. Bei einer Düsengröße des Extruders von 8 mm Durchmesser (Rundschnur), einer Vulkanisationsdauer von 5 Minuten bei 200°C und einer Ausstoßleistung von ca. 1,5 m/min wurde eine homogen geschäumte Rundschnur mit einem Durchmesser von 12 mm und mit runden Poren, homogener Porengrößenverteilung und einer Schaumdichte von 0,5 erhalten.

**Beispiel 12:**

In 100 Teile einer HTV-Siliconkautschukmischung, die 55 Teile eines durch Dimethylvinylsiloxygruppen endblockierten Dimethylpolysiloxans aus Dimethylsiloxan- und Methylvinylsiloxaneinheiten mit einer Viskosität von $2 \cdot 10^7$ mPa·s bei 25°C und 0,15 Gew.-% Si-gebundenen Vinylgruppen und 14 Teile eines durch Hydroxygruppen endblockierten Dimethylpolysiloxans aus Dimethylsiloxan- und Methylvinylsiloxaneinheiten mit einer Viskosität von 35 mPa·s bei 25°C und 0,8 Gew.-% Si-gebundenen Vinylgruppen und 31 Teile einer hydrophilen, pyrogen hergestellten Kieselsäure mit einer BET-Oberfläche von 150 m$^2$/g enthielt, wurden 8 Teile des in Beispiel 10 beschriebenen Eisen(III)-oxids, 1,5 Teile der Treibmittelzusammensetzung A, 0,5 Teile des in Beispiel 1 beschriebenen "Vernetzers E" und 1,7 Teile des in Beispiel 1 beschriebenen "Vernetzers B" auf einer Walze eingemischt. Die entstandene Mischung wurde anschließend zu Schaumprofilen oder -schläuchen extrudiert und im Heißluftkanal vulkanisiert. Bei einer Düsengröße des Extruders von 8 mm Durchmesser (Rundschnur), einer Vulkanisationsdauer von 5 Minuten bei 200°C und einer Ausstoßleistung von ca. 1,5 m/min wurde eine homogen geschäumte Rundschnur mit einem Durchmesser von 10 mm und mit runden Poren, homogener Porengrößenverteilung und einer Schaumdichte von 0,85 erhalten.

**Beispiel 13:**

In 100 Teile der in Beispiel 10 beschriebenen HTV-Siliconkautschukmischung wurden 10 Teile eines Aluminiumoxids (käuflich erwerblich unter dem Handelsnamen "Alcoa T60" bei der Fa. Alcoa), 1,5 Teile der Treibmittelzusammensetzung A, 0,5 Teile des in Beispiel 1 beschriebenen "Vernetzers E" und 1,7 Teile des in Beispiel 1 beschriebenen "Vernetzers B" auf einer Walze eingemischt. Die entstandene Mischung wurde anschließend zu Schaumprofilen oder -schläuchen extrudiert und im Heißluftkanal vulkanisiert. Bei einer Düsengröße des Extruders von 8 mm Durchmesser (Rundschnur), einer Vulkanisationsdauer von 5 Minuten bei 200°C und einer Ausstoßleistung von ca. 1,5 m/min wurde eine homogen geschäumte Rundschnur mit einem Durchmesser von 16 mm und mit runden Poren, homogener Porengrößenverteilung und einer Schaumdichte von 0,55 erhalten.

**Beispiel 14:**

In 100 Teile der in Beispiel 10 beschriebenen HTV-Siliconkautschukmischung wurden 8 Teile eines Titanoxids (käuflich erwerblich unter dem Handelsnamen "Titanoxid P25" bei der Fa. Degussa), 1,5 Teile der Treibmittelzusammensetzung A, 0,5 Teile des in Beispiel 1 beschriebenen "Vernetzers E" und 1,7 Teile des in Beispiel 1 beschriebenen "Vernetzers B" auf einer Walze eingemischt. Die entstandene Mischung wurde anschließend zu Schaumprofilen oder -schläuchen extrudiert und in vier UHF-Kanälen von je 1,5 m Länge, durch welche zusätzlich Heißluft mit einer Temperatur von 130°C strömte, vulkanisiert. Bei einer Düsengröße des Extruders von 8 mm Durchmesser (Rundschnur), einer Vulkanisationsdauer von 6 Minuten bei einer Mikrowellenenergie von 4 x 3 kW und einer Frequenz von 2700 MHz und einer Ausstoßleistung von ca. 1,0 m/min wurde eine homogen geschäumte Rundschnur mit einem Durchmesser von 11 mm und mit runden Poren, homogener Porengrößenverteilung und einer Schaumdichte von 0,75 erhalten.

**Patentansprüche**

1. Treibmittelzusammensetzungen (a), dadurch gekennzeichnet, daß sie Mischungen sind, die

   10 bis 50 Gew.-% Organopolysiloxane (1),
   1 bis 7 Gew.-% Emulgatoren (2),
   20 bis 80 Gew.-% Wasser (3) als Treibmittel, als wäßrige Emulsion und
   5 bis 40 Gew.-% Verdickungsmittel (4) enthalten, mit der Maßgabe, daß sie nicht Kohlenwasserstoffe, Fluorchlorkohlenwasserstoffe, Stickstoff,

   Stickstoffoxid, Luft, Sauerstoff, Kohlendioxid, Dimethylether, Argon, Helium und Organozinnverbindungen enthalten.

2. Treibmittelzusammensetzungen (a) nach Anspruch 1, dadurch gekennzeichnet, daß als Verdickungsmittel Siliciumdioxide mit einer BET-Oberfläche von mindestens 50 m$^2$/g, die gegebenenfalls hydrophobiert sind, verwendet werden.

3. Verwendung von Zusammensetzungen nach Anspruch 1 als Treibmittelzusammensetzungen zur Herstellung von elastomeren Siliconschaumstoffen.

4. Verfahren zur Herstellung der Treibmittelzusammensetzungen (a) nach Anspruch 1 oder 2, dadurch gekennzeichnet, daß wäßrige Emulsionen enthaltend 10 bis 50 Gew.-% Organopolysiloxane (1),

   1 bis 7 Gew.-% Emulgatoren (2), und
   20 bis 80 Gew.-% Wasser (3) mit
   5 bis 40 Gew.-% Verdickungsmittel (4) vermischt werden.

5. Verfahren zur Herstellung von zu elastomeren Siliconschaumstoffen härtbaren Massen, dadurch gekennzeichnet, daß die Treibmittelzusammensetzungen (a) gemäß Anspruch 1 oder 2 oder hergestellt nach Anspruch 4,

   mit Diorganopolysiloxanen (b),
   Vernetzungsmitteln (c),
   gegebenenfalls Vernetzungskatalysatoren (d) und gegebenenfalls Füllstoffen (e) vermischt werden, mit der Maßgabe, daß die Massen nicht Kohlenwasserstoffe, Fluorchlorkohlenwasserstoffe, Stickstoff,

   Stickstoffoxid, Luft, Sauerstoff, Kohlendioxid, Dimethylether, Argon, Helium und Organozinnverbindungen enthalten.

**6.** Verfahren nach Anspruch 5, dadurch gekennzeichnet, daß als Vernetzungsmittel (c) organische Peroxide verwendet werden.

**7.** Verfahren nach Anspruch 5, dadurch gekennzeichnet, daß als Vernetzungsmittel (c) Si-gebundene Wasserstoffatome aufweisende Organopolysiloxane und als Vernetzungskatalysatoren (d) die Anlagerung von Si-gebundenem Wasserstoff an Si-gebundene Alkenylgruppen fördernde Platinkatalysatoren verwendet werden.

**8.** Verfahren zur Herstellung von elastomeren Siliconschaumstoffen, dadurch gekennzeichnet, daß man zuerst den Verfahrensschritt gemäß Anspruch 5 durchführt und dann die Gemische unter Einwirkung von Wärme oder Mikrowellenenergie unter gleichzeitiger Verschäumung zu den elastomeren Siliconschaumstoffen gehärtet werden.

## Claims

**1.** Blowing agent compositions (a), characterized in that they are mixtures which contain

from 10 to 50 % by weight of organopolysiloxanes (1),
from 1 to 7 % by weight of emulsifiers (2),
from 20 to 80 % by weight of water (3) as blowing agent, as an aqueous emulsion and
from 5 to 40 % by weight of thickeners (4),

with the proviso that they do not contain hyrdocarbons, chlorofluorocarbons, nitrogen, nitrogen oxide, air, oxygen, carbon dioxide, dimethyl ether, argon, helium and organotin compounds.

**2.** Blowing agent compositions (a) according to Claim 1, characterized in that the thickeners used are silicon dioxides having a BET surface area of at least 50 $m^2$/g, which optionally have been rendered hydrophobic.

**3.** Use of compositions according to Claim 1 as blowing agent compositions for the preparation of elastomeric silicone foams.

**4.** Process for the preparation of the blowing agent compositions (a) according to Claim 1 or 2, characterized in that aqueous emulsions containing from 10 to 50 % by weight of organopolysiloxanes (1), from 1 to 7 % by weight of emulsifiers (2) and from 20 to 80 % by weight of water (3) are mixed with from 5 to 40 % by weight of thickeners (4).

**5.** Process for the preparation of compositions which are curable to give elastomeric silicone foams,

characterized in that the blowing agent compositions (a) according to Claim 1 or 2 or prepared according to Claim 4, are mixed with
diorganopolysiloxanes (b),
crosslinking agents (c), if appropriate, crosslinking catalysts (d) and,
if appropriate, fillers (e), with the proviso that the compositions do not contain hydrocarbons, chlorofluorocarbons, nitrogen, nitrogen oxide, air, oxygen, carbon dioxide, dimethyl ether, argon, helium and organotin compounds.

**6.** Process according to Claim 5, characterized in that the crosslinking agents (c) used are organic peroxides.

**7.** Process according to Claim 5, characterized in that the crosslinking agents (c) used are organopolysiloxanes containing Si-bonded hydrogen atoms and the crosslinking catalysts (d) used are platinum catalysts which promote the addition of Si-bonded hydrogen onto Si-bonded alkenyl groups.

**8.** Process for the preparation of elastomeric silicone foams, characterized in that firstly the process step according to Claim 5 is carried out and then the mixtures are cured by the action of heat or microwave energy with simultaneous foaming to give the elastomeric silicone foams.

## Revendications

**1.** Compositions d'agents moussants (a), caractérisées en ce qu'elles sont des mélanges qui se composent de

10 à 50% en poids d'organopolysiloxanes (1),
1 à 7% en poids d'émulsifiants (2),
20 à 80% en poids d'eau (3) comme agent de moussant, sous forme d'une émulsion aqueuse, et
5 à 40% en poids d'un agent épaississant (4),

avec la condition qu'elles ne contiennent pas d'hydrocarbures, de fluorochlorohydrocarbures, d'azote, d'oxyde d'azote, d'air, d'oxygène, de dioxyde de carbone, de diméthyléther, d'argon, d'hélium et de composés organoétain.

2. Compositions d'agents moussants (a) suivant la revendication 1, caractérisées en ce que l'on utilise comme agent épaississant, du dioxyde de silicium avec une surface BET d'au moins 50 m$^2$ par g, qui est facultativement rendu hydrophobe.

3. Utilisation des compositions suivant la revendication 1, comme compositions d'agents moussants pour la préparation de mousses élastomères de silicone.

4. Procédé de préparation des compositions d'agents moussants (a) suivant la revendication 1 ou 2, caractérisé en ce que des émulsions aqueuses contenant

10 à 50% en poids d'organopolysiloxanes (1),
1 à 7% en poids d'émulsifiants (2), et
20 à 80% en poids d'eau (3),
sont mélangées avec
5 à 40% en poids d'un agent épaississant (4).

5. Procédé de préparation de substances durcissables en mousses élastomères de silicone, caractérisé en ce que les compositions d'agents moussants (a) suivant la revendication 1 ou 2 ou préparées suivant la revendication 4, sont mélangées avec

des diorganopolysiloxanes (b),
des agents de réticulation (c),
facultativement, des catalyseurs de réticulation (d) et
facultativement, des charges (e),

avec la condition que les substances ne contiennent pas d'hydrocarbures, de fluorochlorohydrocarbures, d'azote, d'oxyde d'azote, d'air, d'oxygène, de dioxyde de carbone, de diméthyléther, d'argon, d'hélium et de composés organoétain.

6. Procédé suivant la revendication 5, caractérisé en ce que l'on utilise des peroxydes organiques comme agent de réticulation (c).

7. Procédé suivant la revendication 5, caractérisé en ce que l'on utilise des organopolysiloxanes comprenant des atomes d'hydrogène à liaison Si comme agent de réticulation (c) et des catalyseurs au platine activant l'addition d'hydrogène à liaison Si sur des groupes alcényle à liaison Si, comme catalyseurs de réticulation (d).

8. Procédé de préparation de mousses élastomères de silicone, caractérisé en ce que l'on réalise d'abord, l'étape du procédé suivant la revendication 5 et ensuite, on durcit le mélange en mousses élastomères de silicone, par action d'énergie thermique ou micro-onde et par moussage simultané.